# EUROPÄISCHE PATENTSCHRIFT

(11) **EP 1 454 856 B1**
(45) Veröffentlichungstag und Bekanntmachung des Hinweises auf die Patenterteilung: **14.12.2005**
(21) Anmeldenummer: 03004663.5
(22) Anmeldetag: 03.03.2003
(51) Int. Cl.: B65G 47/96

(54) **Kippschalen-Sortierförderer**
Tilting trays sorting conveyor
Convoyeur de triage à plateaux basculants

(43) Veröffentlichungstag der Anmeldung: 08.09.2004
(73) Patentinhaber: SIEMENS AKTIENGESELLSCHAFT, 80333 München (DE)
(72) Erfinder: Affaticati, Artemio G., 21052 Busto Arsizio (MI) (IT); Mignano, Paolo, 28043 Bellinzago Novarese (NO) (IT)

(56) Entgegenhaltungen:
- WO-A-02/24557
- DE-A- 3 503 712
- FR-A- 2 528 403

## Beschreibung

Die Erfindung betrifft einen Kippschalen-Sortierförderer, insbesondere für Pakete, Päckchen, Behälter und Gepäckstücke bestehend aus zu einem Zug aneinander gekoppelten und entlang von Fahrschienen verfahrbaren Wagen mit jeweils mindestens einer darauf angeordneten Tragschale, die für die Abgabe von auf der Tragschale aufliegend transportiertem Fördergut mittels eines auf dem Wagen angeordneten Kippantriebes aus einer horizontalen Transportstellung um eine in Fahrtrichtung verlaufende Kippachse beidseitig in eine Entladestellung schwenkbar ist, wobei der die Schwenkbewegung der Tragschale steuernde Kippantrieb an dem freien unteren Ende eines sich nach unten erstreckenden Kipphebels angreift, der um die am Wagen gelagerte Kippachse schwenkbar ist und an seinem entgegengesetzten oberen Ende die Tragschale mittig trägt.

Zum Transport und Vereinzeln von Stückgut haben sich seit langem so genannte Kippschalensorter bewährt. Das Fördergut wird dabei von spurgeführten Fahrzeugen aufgenommen, die an ihrer Oberseite als Tragschalen ausgebildete Ladungsträger aufweisen, die zum Ladungstransport waagerecht gehalten und zum Ladungsabwurf kippbar sind.

Aus der DE 40 90 308 T1 ist ein derartiger Kippschalenförderer bekannt, bei dem ein Kippen der Tragschalen dadurch ermöglicht wird, dass eine ausgewählte, mit der kippbaren Tragschale verbundene Nockenstößelrolle zunächst nach außen und dann nach unten gezogen wird. Beim Ziehen nach außen bewegen sich Rollen, begleitet von einer entsprechenden Schwenkbewegung eines Arms in Führungs-Abschnitten nach außen, so dass sie, wenn sie entlang der Abschnitte geführt werden, dem Arm die Abwärtsbewegung ermöglichen, durch die der Kippkörper und seine Tragschale gekippt werden. Während des Kippens bewegen sich andere Rollen spurgeführt nach oben. Dabei bleibt der Arm in einer weitgehend unveränderten Winkellage, wodurch gewährleistet wird, dass die Rollen beim anschließenden Zurückkippen in die Ausgangslage zurückkehren. Obgleich die Rollen in einer senkrechten Ebene zur Fahrtrichtung in entsprechenden Kurvenführungen gleiten, besteht doch ein hoher Widerstand für die Rollen, nach außen gezogen zu werden. Diesem Nachaußenziehen steht ein Nachinnenziehen der analogen Rolle am gegenüberliegenden Arm entgegen. Die Reibungswiderstände sind daher entsprechend groß und Rollen und Arme sind entsprechend hoch beansprucht. Diese bekannte Lösung kann daher allenfalls für kleinere Fördergutstücke eingesetzt werden, deren Gewicht einige Kilogramm nicht übersteigt.

Des weiteren ist aus der französischen Offenlegungsschrift FR 2528403 A1 ein Sortierförderer gemäß dem Oberbegriff des Anspruchs 1, mit einzelnen antreibbaren Wagen bekannt, auf denen um eine in Fahrtrichtung verlaufende Kippachse schwenkbare Tragschalen angeordnet sind. Die Tragschalen weisen an ihren Unterseiten in Fahrtrichtung voneinander beabstandete und sich nach unten erstreckende Kipphebel auf, die in ihrem mittleren Bereich an den Kippachsen am Wagen gelagert sind. An dem freien Kipphebelende greift ein Kippmechanismus an, der im wesentlichen durch einen Doppelhebel gebildet ist, der um eine parallel zur Kippachse verlaufende erste Achse und eine quer zur Fahrtrichtung verlaufende zweite Achse schwenkbar an dem Wagen gelagert ist. Das erste Ende des Doppelhebels ist gelenkig mit dem freien Kipphebelende verbunden und das zweite Ende trägt um im wesentlichen horizontal verlaufende Achsen drehbare Rollen. Die Rollen werden für den Kippvorgang der Tragschale durch entlang der Fahrschienen angeordnete ortsfeste Kurvenschienen, deren Verlauf in Vertikalrichtung ansteigend ist, angehoben, so dass zunächst der Doppelhebel um die zweite Achse für eine Entriegelung der Tragschale und anschließend um die erste Achse zum Kippen der Tragschale verschwenkt wird.

Die bekannten Kippschalenförderer sind sehr kompliziert, weil zur Einleitung der Kippbewegung der Tragschalen aufwendige mechanische Rollen, Hebel und Gestänge erforderlich sind, die mit ebensolchen aufwendigen Schienen, Rollen und Führungen am Fahrweg des Förderers im Kippbereich der Tragschalen zusammenwirken. Der Kippwinkel der Tragschalen ist durch die Geometrie dieser mechanischen Bauteile unveränderbar festgelegt, Kippzeitpunkt und das Kippverfahren sind durch die Ausgestaltung der mechanischen Führungen neben dem Fahrweg des Förderers festgelegt.

Aufgabe der vorliegenden Erfindung ist es, einen bekannten Kippschalenförderer so auszugestalten, dass bei vereinfachter und somit kostengünstiger Bauweise eine flexible Einleitung der Kippbewegung der Tragschalen möglich wird und dass der Kippwinkel und damit die Neigung der Tragschale variabel gesteuert verstellbar ist.

Zur,Lösung der Aufgabe wird erfindungsgemäß vorgeschlagen, dass der Kippantrieb am freien unteren Ende des Kipphebels befestigt ist und einen drehrichtungsänderbaren Elektromotor sowie mindestens ein von diesem antreibbares Zahnritzel mit zur Kippachse paralleler Drehachse umfasst, das mit einer am Wagen quer zur Fahrtrichtung befestigten gebogenen Zahnstange korrespondiert, die äquidistant zur Kippachse der Tragschalen verläuft und deren Bogenmaß mindestens dem zum Kippen der Tragschale in die Entladestellungen erforderlichen maximalen Pendelwinkel des Kipphebels entspricht.

Eine Besonderheit der erfindungsgemäßen Lösung ist die auf dem Wagen mitfahrende Anordnung des Kippantriebes in Form eines am Kipphebel befestigten Elektromotors, der mit einer oder vorzugsweise zwei am Rahmen des Wagens befestigten Zahnstangen zusammenwirkt. Durch diese Anordnung wird der Kippantrieb unabhängig von jeglichen Führungsschienen, Kurvenstücken und Steuerrollen am Fahrweg des Förderers, sowie weiteren mechanischen Gestängen und Hebeln, wie sie in den verschiedenster Ausführungen aus dem Stand der Technik bekannt sind. Das Kippen der Tragschale erfolgt einfach durch Ansteuern des sich an der oder den Zahnstangen abstützenden Elektromotors, wodurch der Kipphebel mit der darauf befestigten Tragschale in Kippstellung gebracht werden kann. Die Zahnstangen sind, entsprechend der Bahn, in der der Kipphebel mit dem Elektromotor um die Kippachse verschwenkt, bogenförmig angeordnet, wobei die Länge jeder Zahnstange dem maximal erforderlichen Pendelwinkel des Kipphebels angepasst ist.

In einer einfachen Ausführungsform der Erfindung ist jedes Zahnritzel unmittelbar auf der Ausgangswelle des Elektromotors angeordnet. Bei dem Elektromotor kann es sich um einen einfachen, klein bauenden und preiswerten Motor handeln, weil in Folge der Hebelwirkung des Kipphebels und bei entsprechender Gewichtsverteilung zwischen Tragschale und Elektromotor ein nur geringes Moment aufgebracht werden muss, um selbst die mit schwerem Fördergut beladene Tragschale zu verschwenken.

Günstigerweise greifen an jeder Tragschale zwei Kipphebel an, zwischen deren unteren freien Enden der Elektromotor befestigt ist, der an beiden Enden seiner Motorwelle jeweils ein Zahnrad trägt, das mit jeweils einer von zwei am Wagen befestigten gebogenen Zahnstangen korrespondiert.

Vorzugsweise ist der Elektromotor von einem im oberen, der Tragschale nahen Bereich des Kipphebels angeordneten Controller ansteuerbar, von dort erhält er die erforderlichen Signale, wie z.B. "rechtsdrehend" oder "linksdrehend"; weitere mechanische Einrichtungen sind entbehrlich. Der Controller ist vorzugsweise in einem unterhalb der Tragschale angeordneten Gehäuse untergebracht.

Damit beim Beladen und bei Transportfahrt des Förderers, insbesondere auf geraden Fahrstrecken kein unbeabsichtigtes Verschwenken der Tragschale eintreten kann, ist vorzugsweise zwischen Kipphebel und Wagen ein Verriegelungsmechanismus vorgesehen, mit dem die Tragschale in der horizontalen Transportstellung blockierbar ist.

Bevorzugten besteht der Verriegelungsmechanismus aus einem am Kipphebel angeordneten Sperrbolzen, der am Wagen elektomagnetisch verriegelbar ist. Der Sperrbolzen kann beispielsweise durch einen Magnetanker aus oder eingefahren werden, und in eine Ausnehmung oder zwischen Anschläge bewegt werden, die am Wagen fest angeordnet sind.

Um ein Kippen der Tragschale um einen bestimmten festgelegten Betrag hinaus zu verhindern, wird vorzugsweise der Pendelwinkel des Kipphebels elektronisch gesteuert und durch beidseitig des Pendelweges am Wagen vorgesehene Endanschläge begrenzt. Diese Endanschläge können passiv, z.B als Gumminocken, ausgebildet sein oder auch als Endschalter gestaltet sein, durch die der Elektromotor beim Erreichen der Endstellung auf Stop geschaltet wird.

Als zusätzliche Unterstützung für den Kippantrieb und zur Unterstützung der Rückstellung der Tragschale in ihre Ausgangsstellung ist vorzugsweise vorgesehen, dass die horizontale Transportstellung der Tragschale durch auf den Kipphebel wirkende Kraft einer Feder einstellbar ist.

Eine solche Feder kann beispielsweise als einseitig eingespannte Blattfeder ausgebildet sein, die sich in der entlasteten Stellung parallel zur Kipphebellängsachse erstreckt und die Federrückstellkraft zwischen Anschlägen am Wagen speichert, sobald der Kipphebel aus der Ruhestellung ausgelenkt wird. D. h., beim Betätigen des Elektromotors verschwenkt der Kipphebel mit der Tragschale in die vorgesehene Kippstellung wobei gleichzeitig die Feder gegen einen Anschlag gedrückt und dabei gespannt wird. Sobald die Antriebskraft des Elektromotors abgeschaltet ist, wirkt die Feder in entgegengesetzter Richtung und bewirkt ein Rückstellen oder die Unterstützung des Rückstellens des Kipphebels in die Transportstellung der Tragschale.

Um den Elektromotor und den dazu zugehörenden Controller mit Energie zu versorgen, sind vorzugsweise zur Einspeisung des elektrischen Antriebs- und/oder Steuerstroms Schleifleitungen am Fahrweg des Wagens vorgesehen. Diese Art der Energieversorung und Steuerung ist an sich bekannt und braucht hier nicht weiter erläutert zu werden.

In einer besonderen Ausgestaltung der Erfindung wird vorgeschlagen, dass die Tragschale mit Hilfe des Kippantriebes und dessen Steuerung gezielt aus der horizontalen in eine beliebige Position zwischen der horizontalen Transportstellung und der Entladestellung verschwenkbar und in dieser Position vorübergehend festlegbar ist. Dieses "variable" Kippen der Tragschale ermöglicht beispielsweise eine Neigung der Tragschale in Kurvenstrecken um einen beliebigen Winkel, um der auf das Fördergut wirkenden Fliehkraft entgegenzuwirken. Die Neigung kann an die Kurve bzw. die aus der Geschwindigkeit des Fahrzeuges resultierende Fliehkraft angepasst werden, eine Rückstellung in die Horizontale nach Durchlaufen der Kurve ist problemlos durch das Kontrollsystem des Kippschalen-Sortierförderers steuerbar.

Günstigerweise sind die Dauer, die Geschwindigkeit und die Beschleunigung des Kippvorganges der Tragschale steuerbar sind, ebenfalls kann der Kippvorgang der Tragschale in Abhängigkeit von der Größe, der Lage und von dem Gewicht des auf der Tragschale liegenden Fördergutes gesteuert werden. Auf diese Weise ist ein individuelle Anpassung der Entladevorgänge an das Fördergut und die Entladeplätze möglich.

Bei Anordnung von zwei Tragschalen auf einem Wagen ist vorzugsweise eine unabhängige Steuerung oder eine simultane Steuerung der Kippbewegung der beiden Tragschalen ausführbar.

Vorzugsweise besteht ein Kontrollsystem für einen Zug des Kippschalen-Sortierförderers aus einer Stromversorgungsleitung für das System, aus Kommunikationsleitungen zwischen einer an einem übergeordneten Rechner angeschlossenen Junction-Box und den auf den einzelnen Wagen angeordneten Controllern, jeweils einer Kommunikationsleitung zwischen den Controllern benachbarter Wagen eines Zuges zur Selbstadressierung dieser Wagen und einer Stromversorgungsleitung zwischen jeweils dem Controller eines Wagens und dem zugehörigen Elektromotor sowie Sperrbolzen.

Ein Verfahren zur Steuerung eines Kippschalenförderers der vorstehend beschriebenen Art ist dadurch gekennzeichnet, dass die Junction-Box nach Kommunikation mit einem übergeordneten Rechner, in dem die für den Betrieb des Transportsystems erforderlichen Informationen abgelegt sind, einem der auf jedem zu einem Zug zusammengekoppelten Wagen angeordneten, als Master bestimmten Controller einer Adresse mitteilt, der die Adresse zur Selbstadressierung an einen weiteren Wagen des Zuges weitergibt, welcher nach Selbstkonfiguration seinerseits die Adresse zur Selbstkonfiguration an den nächsten Wagen weiterleitet, bis alle Wagen des Zuges konfiguriert sind. Einem beispielsweise aus 8 oder 32 Wagen bestehenden Zug wird ein Master-Controller zugewiesen, dem von der Junction-Box eine Adresse zugeteilt wird. Diese Adresse wird beim Starten des Zuges vom Master-Controller an das Kontrollsystem des darauffolgenden Wagens automatisch weitergegeben. Dieser darauffolgende Wagen konfiguriert sich entsprechend selbst, wobei sich der Prozess wiederholt, d. h., die Adresse wir von Wagen zu Wagen weitergegeben, bis alle Wagen adressiert sind. Das hat den Vorteil, dass bei einem defekten Kontrollsystem lediglich eine physische Auswechslung des defekten Teiles erfolgen muss; denn das neue Kontrollsystem konfiguriert sich von selbst.

Vorzugsweise wird vorgeschlagen, dass über die Kommunikationsleitungen zwischen der an den übergeordneten Rechner angeschlossenen Junction-Box und den auf den einzelnen Wagen angeordneten Controllern, den Controllern die Aktivierungsbefehle für den Elektromotor zur Veränderung der Winkelstellung des Kipphebels zugeleitet werden. Jeder Controller kann den Elektromotor mit unterschiedlichen vorgebbaren Profilen aktivieren, so dass das Entladeverfahren sowohl dem zu fördernden Material als auch der Geometrie der Entladeplätze gerecht werden kann.

Über die vorhandenen Kommunikationsleitungen können auch Systemdiagnostik und Statistikangaben ausgetauscht werden.

Vorzugsweise sind der Elektromotor und der Sperrbolzen am Kipphebel so miteinander verknüpft, dass vor der Aktivierung des Elektromotors der Sperrbolzen elektromagnetisch entriegelt wird. So wird sichergestellt, dass bei einer Störung kein unbeabsichtigtes Abkippen der Tragschale erfolgt.

Der erfindungsgemäße Kippschalenförderer ist sehr einfach in seinem Aufbau und dennoch äußerst variable im Einsatz. Der auf jedem Wagen mitfahrende Elektromotor, der unmittelbar auf den die Tragschale tragenden Kipphebel einwirkt, und der von einem übergeordneten Rechner und an Bord befindlichen Controllern gesteuert wird, kann nicht nur ohne mechanische Veränderungen am System das Entladen der Tragschalen an jeder beliebigen Stelle am Fahrweg des Förderers einleiten, sondern vor allem auch den Kippwinkel, die Kippgeschwindigkeit bzw.- beschleunigung und Kurvenneigung des Förderers verändern. Die Steuerung ist einfach programmierbar, so dass insgesamt ein gegenüber dem bekannten Stand der Technik erheblich vereinfachtes und verbessertes Transportsystem geschaffen wird.

Die Erfindung wird anhand des in der Zeichnung dargestellten Ausführungsbeispiels erläutert. Es zeigt:
- Figur 1: einen Querschnitt durch einen Wagen des Kippschalenförderers einer Ausführungsform der Erfindung und
- Figur 2: das Schaltbild der Steuerung.

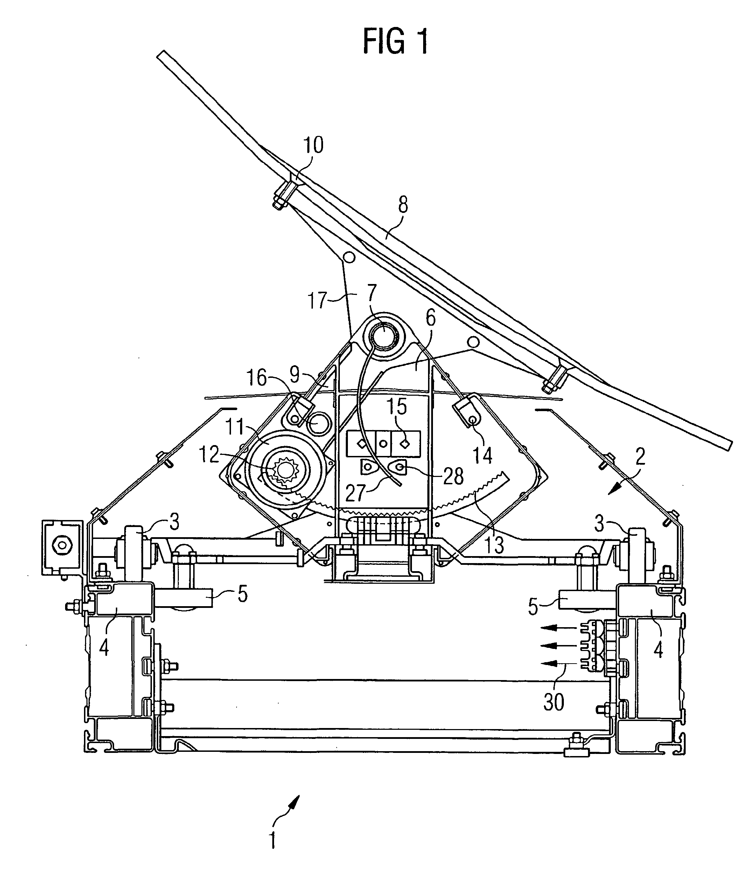

In Figur 1 ist mit 1 ein Querschnitt durch einen Kippschalenförderer bezeichnet. Der mit 2 bezeichnete Wagen ist mit seinen horizontalen Rädern 3 auf den Fahrschienen 4 des Förderersystems geführt; vertikale Führungsräder 5 halten den Wagen 2 in der Spur. An einem sich nach oben erstreckenden Rahmenteil 6 des Wagens 2 ist die horizontale Kippachse 7 für die beiden Kipphebel 9 vorgesehen, an denen die Tragschale 8 bei 10 befestigt ist. In der Zeichnung ist nur der vorderer der beiden hintereinanderliegenden Kipphebel erkennbar. Die obere Seite der Kipphebel 9 ist verbreitert, um die Tragschale 8 an ihrer Unterseite besser befestigen zu können. Die Kipphebel 9 erstrecken sich jenseits der Kippachse 7 nach unten, wobei am unteren Ende zwischen den Kipphebeln 9 der Elektromotor 11 befestigt ist. Der Elektromotor 11 trägt auf seinen beiden Enden der Ausgangswelle je ein Zahnritzel 12, das mit je einer der bogenförmigen Zahnstangen 13 kämmt, die am Rahmenteil 6 des Wagens 2 quer zur Fahrtrichtung des Wagens 2 in parallelem Abstand zueinander befestigt sind. Bei Betätigung des Elektromotors 11 kämmen die Zahnritzel 12 mit den Zahnstangen 13 und bewegen die Kipphebel 9 und damit die Tragschale 8 um die Kippachse 7, abhängig von der umsteuerbaren Drehrichtung des Elektromotors 11, nach rechts oder links. Die Endstellungen der Kipphebel werden durch Anschläge oder Endschalter 14 begrenzt.

An dem Rahmenteil 6, in dem die Kippachse 7 gelagert ist, ist ein Verriegelungsmechanismus 15 für mindestens einen der Kipphebel 9 vorgesehen, in den ein Sperrbolzen 16 eingerastet werden kann, wenn sich der Kipphebel und damit die Tragschale in einer Stellung befindet, in der die Tragschale horizontal ausgerichtet ist. Die Bewegung der Kipphebel und die Ansteuerung des Elektromotors erfolgt über einen Controller, der im oberen Bereich 17 der Kipphebel 9 unterhalb der Tragschale 8 in einem (nicht dargestellten) Gehäuse eingebaut ist. Der Controller wird (in ebenfalls nicht dargestellter Weise) über einen Bus bzw. Schleifleitungen angesteuert, die am Rahmen der Fahrschienen 4 bzw. unterhalb des Wagens 2 verlegt sind.

Mit 27 ist eine Blattfeder bezeichnet, die sich in der entlasteten Stellung parallel zur Längsachse der Kipphebel 9 erstreckt und im Bereich der Kippachse 7 an einem der Kipphebel 9 befestigt ist. Beim Auslenken der Kipphebel 9 aus der Vertikalen wird die Blattfeder 27 gegen den rechten oder linken Anschlag 28 am Rahmenteil 6 des Wagens 2 gedrückt und gebogen, wobei eine Kraft in der Blattfeder 27 gespeichert wird, die die Kipphebel 9 zurückzustellen versucht. Diese Feder stellt die Tragschale 8 auch bei Ausfall eines Antriebsteils in die Neutralstellung zurück.

Die Einspeisung des elektrischen Antriebs- und/oder Steuerstromes erfolgt über Schleifleitungen am Fahrweg des Wagens 2 in ansich bekannter Weise. Diese Ausführungsform der Erfindung ermöglicht es auch, die Tragschale 8 mit Hilfe des Kippantriebes und dessen Steuerung gezielt aus der Horizontalen in eine beliebige Position zwischen der horizontaler Transportstellung und der Entladestellung zu verschwenken und in dieser Position vorübergehend festzulegen. Dadurch können die Entladestelle, der Kippwinkel und auch die Transportstellung der Tragschale 8 sehr flexibel verändert werden, wobei Schrägstellungen der Tragschale 8 entgegen der wirksamen Fliehkraft bei Kurvendurchfahrten der Wagen 2 sehr einfach realisierbar sind.

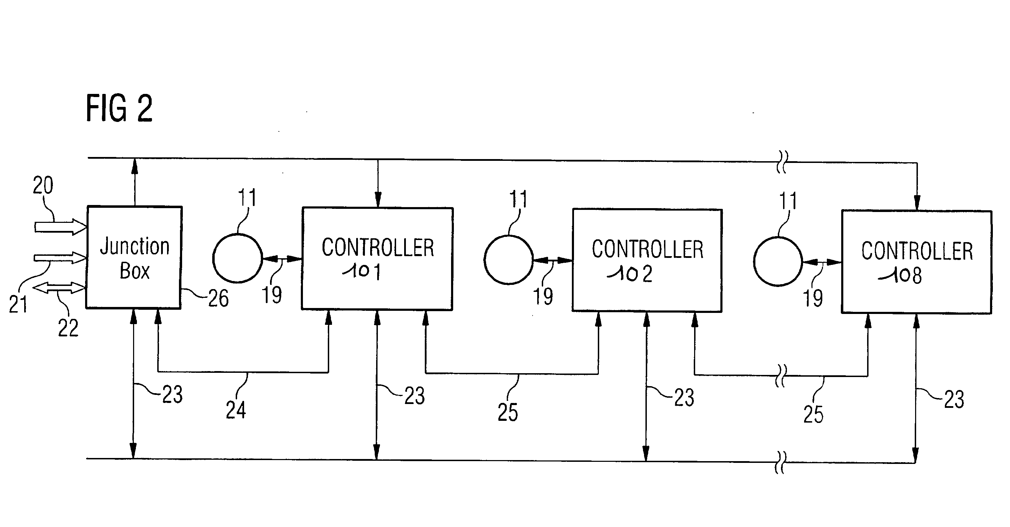

In der Figur 2 ist das Schaltbild der Steuerung des Kippschalenförderers schematisch dargestellt. Die Stromversorgungsleitung für das System ist mit 18 bezeichnet, sie speist die Controller 101 bis 108 eines insgesamt aus acht Wagen bestehenden Zuges, von denen aber nur 3 Controller 101, 102, 108 symbolisch dargestellt sind. Jeder Controller ist über eine Kommunikationsleitung 19 mit dem jeweiligen Elektromotor 11 verbunden, so dass der Antrieb individuell aktiviert werden kann.

Auf der linken Seite der Zeichnung ist eine Junction-Box 26 dargestellt, die an eine 65 Volt Gleichstromquelle 20 angeschlossen ist. Die Junction-Box 26 ist über die Datenverbindung 21 mit dem Mainport 22 eines übergeordneten Rechners, vorzugsweise einem PC verbunden. Von der Junction-Box 26 führt eine serielle Kommunikationsleitung 23 zu jedem Controller 101 bis 108; über diese Leitung erfolgt die Kommunikation in beiden Richtungen, so dass auch z. B. statistische Daten abgerufen werden können. Darüber hinaus ist die Junction-Box 26 über die Leitung 24 mit dem benachbarten ersten Controller 101 verbunden, dieser wiederum ist über die Leitung 25 mit dem benachbarten controller 102 verbunden; in gleicher Weise sind alle aufeinanderfolgenden Controller 101 bis 108 miteinander verknüpft. Diese Verknüpfung dient der Selbstadressierung; denn in jedem der aus beispielsweise 8 Wagen bestehenden Züge ist ein "Master-Carrier" festgelegt, an den der PC über die Junction-Box eine Adresse verteilt. Beim Starten gibt der Master-Carrier die Adresse dem Controller des darauf folgenden Wagens automatisch weiter, so dass sich dieser entsprechend selbst konfiguriert. Dieser Prozess wiederholt sich über die Datenleitungen 24 bzw. 25, bis sich alle Wagen mit der entsprechenden Adresse konfiguriert haben. Sollte eines der Controller wegen eines Defektes ersetzt werden müssen, so ist bei dieser Konfiguration lediglich eine physische Auswechslung erforderlich; denn das erneuerte Kontrollsystem konfiguriert sich von selbst.

Das dargestellte Kontrollsystem führt folgende Hauptbefehle aus:
a Gesteuerte Pendelbewegung der Kipphebel, ausgehend vom zentralen Punkt, wobei die Kipphebel im wesentlichen senkrecht stehen (horizontale Tragschale), zur rechten Seite,
b gesteuerte Kipphebelbewegung vom zentralen Punkt zur linken Seite,
c Rückstellung der sich nach unten erstreckenden Kipphebel von einer der beiden Seiten zum zentralen Punkt und
d gesteuerte Kipphebelbewegung von der rechten zur linken Seite und umgekehrt.

Bezüglich der Hauptbefehle a und b ist darauf zu achten, dass die Kipphebel anfänglich durch den Sperrbolzen in der zentralen Stellung blockiert sind. Um die Befehle 1, 2 und 4 auszuführen, muss der Controller zunächst den Sperrbolzen entfernen. Das erfolgt durch Speisung eines aktivierenden elektromagnetischen Relais, mit dessen Ansteuerung gleichzeitig vom Controller ein Antriebspositionstest durchgeführt wird, damit die Kipphebel in ihrer Stellung bleiben. Sobald der Sperrbolzen von seiner Sperre komplett gelöst ist, aktiviert der Controller den Antrieb des Elektromotors, um die Kipphebel zu verschwenken.

Die Kipphebelverschwenkung zur Seite kann in drei Bewegungen beschrieben werden:
a die Kipphebel verschieben sich, bis sie die äußerste linke bzw. äußerste rechte Seite erreicht haben,
b die Kipphebel verschieben sich, bis sie eine mittlere Stellung zur rechten bzw. zur linken Seite erreicht haben und
c die Kipphebel verschieben sich zu einer der beiden Seiten und geht danach in eine beliebige mittlere Stellung zwischen der äußersten linken und der äußersten rechten Seite.

Während die Bewegungen unter a) und b) dem Abladen der Tragschale nach der rechten bzw. der linken Seite entsprechen, dient die Verschiebung unter c) den Bewegung vom Fördergut auf der Tragschale oder dem Ausgleich der auf das Fördergut wirkenden Fliehkraft beim Durchfahren von Kurvenstrecken.

## Patentansprüche

1. Kippschalen-Sortierförderer (1), insbesondere für Pakete, Päckchen, Behälter und Gepäckstücke bestehend aus zu einem Zug aneinander gekoppelten und entlang von Fahrschienen (4) verfahrbaren Wagen (2) mit jeweils mindestens einer darauf angeordneten Tragschale (8), die für die Abgabe von auf der Tragschale (8) aufliegend transportiertem Fördergut mittels eines auf dem Wagen (2) angeordneten Kippantriebes aus einer horizontalen Transportstellung um eine in Fahrtrichtung verlaufende Kippachse (7) beidseitig in eine Entladestellung schwenkbar ist, wobei der die Schwenkbewegung der Tragschale (8) steuernde Kippantrieb an dem freien unteren Ende eines sich nach unten erstreckenden Kipphebels (9) angreift, der um die am Wagen (2) gelagerte Kippachse (7) schwenkbar ist und an seinem entgegengesetzten oberen Ende die Tragschale (8) mittig trägt,
**dadurch gekennzeichnet, dass**
der Kippantrieb am freien unteren Ende des Kipphebels (9) befestigt ist und einen drehrichtungsänderbaren Elektromotor (11) sowie mindestens ein von diesem antreibbares Zahnritzel (12) mit zur Kippachse (7) paralleler Drehachse umfasst, das mit einer am Wagen (2) quer zur Fahrtrichtung befestigten gebogenen Zahnstange (13) korrespondiert, die äquidistant zur Kippachse (7) der Tragschalen (8) verläuft und deren Bogenmaß mindestens dem zum Kippen der Tragschale (8) in die Entladestellungen erforderlichen maximalen Pendelwinkel des Kipphebels (9) entspricht.

2. Kippschalen-Sortierförderer nach Anspruch 1,
**dadurch gekennzeichnet, dass**
jedes Zahnritzel (12) unmittelbar auf der Ausgangswelle des Elektromotors (11) angeordnet ist.

3. Kippschalen-Sortierförderer nach Anspruch 1 und 2,
**dadurch gekennzeichnet, dass**
an jeder Tragschale zwei Kipphebel (9) angreifen, zwischen deren unteren freien Enden der Elektromotor (11) befestigt ist, der an beiden Enden einer Motorwelle jeweils ein Zahnrad trägt, das mit jeweils einer von zwei am Wagen befestigten gebogenen Zahnstangen (13) korrespondiert.

4. Kippschalen-Sortierförderer nach Anspruch 1, 2 oder 3,
**dadurch gekennzeichnet, dass**
der Elektromotor (11) von einem im oberen, der Tragschale nahen Bereich des Kipphebels (9) angeordneten Controller ansteuerbar ist.

5. Kippschalen-Sortierförderer nach Anspruch 1 bis 4,
**dadurch gekennzeichnet, dass**
zwischen Kipphebel (9) und Wagen (2) ein Verriegelungsmechanismus vorgesehen ist, mit dem die Tragschale (8) in der horizontalen Transportstellung blockierbar ist.

6. Kippschalen-Sortierförderer nach Anspruch 5,
**dadurch gekennzeichnet, dass**
der Verriegelungsmechanismus aus einem am Kipphebel (9) angeordneten Sperrbolzen (16) besteht, der am Wagen (2) elektromagnetisch verriegelbar ist.

7. Kippschalen-Sortierförderer nach Anspruch 1 bis 6,
**dadurch gekennzeichnet, dass**
der Pendelwinkel des Kipphebels (9) elektronisch steuerbar und durch beidseitig des Pendelweges am Wagen (2) vorgesehene Endanschläge und/oder Endschalter (14) begrenzbar ist.

8. Kippschalen-Sortierförderer nach Anspruch 7,
**dadurch gekennzeichnet, dass**
die Endanschläge und/oder Endschalter (14) mit dem am Kipphebel (9) angeordneten Sperrbolzen (16) mechanisch zusammenwirken.

9. Kippschalen-Sortierförderer nach einem der Ansprüche 1 bis 8,
**dadurch gekennzeichnet, dass**
die horizontalen Transportstellung der Tragschale (8) durch auf den Kipphebel (9) wirkende Federkraft einstellbar ist.

10. Kippschalen-Sortierförderer nach Anspruch 9,
**dadurch gekennzeichnet, dass** eine
als einseitig eingespannte Blattfeder (27) ausgebildete Feder sich in der entlasteten Stellung parallel zur Kipphebellängsachse erstreckt und die Federrückstellkraft zwischen Anschlägen (28) am Wagen (2) speichert, sobald der Kipphebel (9) aus der Ruhestellung ausgelenkt wird.

11. Kippschalen-Sortierförderer nach einem der Ansprüche 1 bis 10,
**dadurch gekennzeichnet, dass**
die Einspeisung des elektrischen Antriebs- und/oder Steuerstromes über Schleifleitungen (30) am Fahrweg des Wagens erfolgt.

12. Kippschalen-Sortierförderer nach einem der Ansprüche 1 bis 11,
**dadurch gekennzeichnet, dass**
die Tragschale (8) mit Hilfe des Kippantriebes und dessen Steuerung gezielt aus der Horizontalen in eine beliebige Position zwischen der horizontaler Transportstellung und der Entladestellung verschwenkbar und in dieser Position vorübergehend festlegbar ist.

13. Kippschalen-Sortierförderer nach einem der Ansprüche 1 bis 12,
**dadurch gekennzeichnet, dass**
die Dauer, die Geschwindigkeit und die Beschleunigung des Kippvorganges der Tragschale (8) steuerbar sind.

14. Kippschalen-Sortierförderer nach einem der Ansprüche 1 bis 13,
**dadurch gekennzeichnet, dass**
der Kippvorganges der Tragschale (8) in Abhängigkeit von der Größe, der Lage und von dem Gewicht des auf der Tragschale (8) liegenden Fördergutes steuerbar sind.

15. Kippschalen-Sortierförderer nach einem der Ansprüche 1 bis 14,
**dadurch gekennzeichnet , dass**
bei Anordnung von zwei Tragschalen (8) auf einem Wagen eine unabhängige Steuerung oder eine simultane Steuerung der Kippbewegung der beiden Tragschalen (8) ausführbar ist.

16. Kippschalen-Sortierförderers nach den Ansprüchen 1 - 15,
**gekennzeichnet durch**
ein Kontrollsystem (20-25) für einen Zug des Kippschalen-Sortierförderers, bestehend aus einer Stromversorgungsleitung (18) für das System, Kommunikationsleitungen (23) zwischen einer an einen übergeordneten Rechner angeschlossenen Junction-Box (26) und den auf den einzelnen Wagen angeordneten Controllern (101-108), jeweils einer Kommunikationsleitung (24, 25) zwischen den Controllern (101-108) benachbarter Wagen (2) eines Zuges zur Selbstadressierung dieser Wagen (2) und einer Stromversorgungsleitung (19) zwischen jeweils dem Controller (101-108) eines Wagens (2) und dem zugehörigen Elektromotor (11) sowie Sperrbolzen (16).

17. Verfahren zur Steuerung eines Kippschalen-Sortierförderer nach den Ansprüchen 1 bis 16,
**dadurch gekennzeichnet, dass** die Junction-Box (26) nach Kommunikation mit einem übergeordneten Rechner, in dem die für den Betrieb des Transportsystems erforderlichen Informationen abgelegt sind, einem der auf jedem zu einem Zug gekoppelten Wagen (2) angeordneten, als Master bestimmten Controller eine Adresse mitteilt, der die Adresse zur Selbstadressierung an einen weiteren Wagen des Zuges weitergibt, welcher nach Selbstkonfiguration seinerseits die Adresse zur Selbstkonfiguration an den nächsten Wagen weiterleitet, bis alle Wagen (2) des Zuges konfiguriert sind.

18. Verfahren nach Anspruch 17,
**dadurch gekennzeichnet, dass**
über die Kommunikationsleitungen (23) zwischen der an den übergeordneten Rechner angeschlossenen Junction-Box (26) und den auf den einzelnen Wagen (2) angeordneten Controllern (101-108) die Aktivierungsbefehle für den Elektromotor (11) zur Veränderung der Stellung des Kipphebels (9) zugeleitet werden.

19. Verfahren nach Anspruch 18,
**dadurch gekennzeichnet, dass**
über die Kommunikationsleitungen (23) Systemdiagnostik- und Statistikangaben ausgetauscht werden.

20. Verfahren nach einem der Ansprüche 17 bis 19
**dadurch gekennzeichnet, dass**
vor der Aktivierung des Elektromotors (11) der Sperrbolzen (16) für den Kipphebel (9) elektromagnetisch entriegelt wird.

## Claims

1. Sorting conveyor (1) provided with tilting bowls, in particular for packages, parcels, containers and baggage, comprising cars (2), which are coupled to one another to form a train and can be moved along by running rails (4), each having at least one carrier bowl (8) which is arranged thereon and can be pivoted from a horizontal transport position, about a tilting axis (7) extending in the direction of travel, on both sides to an unloading position for the purpose of delivering conveyed goods transported whilst resting on the carrier bowl (8) by means of a tilting drive arranged on the car (2), the tilting drive, which controls the pivoting movement of the carrier bowl (8), acting on the free, lower end of a tilting lever (9) which extends downwards, can be pivoted about the tilting axis (7) mounted on the car (2) and bears the carrier bowl (8) centrally at its opposite, upper end, **characterized in that** the tilting drive is fixed to the free, lower end of the tilting lever (9) and comprises an electric motor (11), whose direction of rotation can be altered, and at least one pinion (12), which can be driven by said electric motor (11), having an axis of rotation which is parallel to the tilting axis (7), said pinion (12) corresponding to an arched, toothed rod (13) which is fixed to the car (2) transversely with respect to the direction of travel, extends equidistantly with respect to the tilting axis (7) of the carrier bowls (8) and whose radian measure at least corresponds to the maximum pendulum angle of the tilting lever (9) which is required for tilting the carrier bowl (8) into the unloading positions.

2. Sorting conveyor provided with tilting bowls according to Claim 1, **characterized in that** each pinion (12) is arranged directly on the output shaft of the electric motor (11).

3. Sorting conveyor provided with tilting bowls according to Claims 1 and 2, **characterized in that** two tilting levers (9) act on each carrier bowl, the electric motor (11) being fixed between the lower, free ends of said tilting levers, said electric motor (11) bearing, at each of the two ends of a motor shaft, a toothed wheel which corresponds to in each case one of two arched, toothed rods (13) fixed to the car.

4. Sorting conveyor provided with tilting bowls according to Claim 1, 2 or 3, **characterized in that** the electric motor (11) can be driven by a controller arranged in the upper region of the tilting lever (9) close to the carrier bowl.

5. Sorting conveyor provided with tilting bowls according to Claims 1 to 4, **characterized in that** a latching mechanism is provided between the tilting lever (9) and the car (2), by means of which latching mechanism the carrier bowl (8) can be locked in the horizontal transport position.

6. Sorting conveyor provided with tilting bowls according to Claim 5, **characterized in that** the latching mechanism comprises a locking bolt (16) which is arranged on the tilting lever (9) and can be electromagnetically latched to the car (2).

7. Sorting conveyor provided with tilting bowls according to Claims 1 to 6, **characterized in that** the pendulum angle of the tilting lever (9) can be controlled electronically and can be delimited by end stops and/or end switches (14) provided on both sides of the pendulum path on the car (2).

8. Sorting conveyor provided with tilting bowls according to Claim 7, **characterized in that** the end stops and/or end switches (14) interact mechanically with the locking bolt (16) arranged on the tilting lever (9).

9. Sorting conveyor provided with tilting bowls according to one of Claims 1 to 8,
**characterized in that** the horizontal transport position of the carrier bowl (8) can be set by spring force acting on the tilting lever (9).

10. Sorting conveyor provided with tilting bowls according to Claim 9, **characterized in that** a spring in the form of a leaf spring (27) which is clamped at one end extends parallel to the tilting lever longitudinal axis in the relieved position and stores the resetting spring force between stops (28) on the car (2) as soon as the tilting lever (9) is deflected out of the rest position.

11. Sorting conveyor provided with tilting bowls according to one of Claims 1 to 10, **characterized in that** the electrical drive current and/or control current is fed in via contact collector lines (30) on the travel path of the car.

12. Sorting conveyor provided with tilting bowls according to one of Claims 1 to 11, **characterized in that** the carrier bowl (8) can be pivoted in a targeted manner from the horizontal to any desired position between the horizontal transport position and the unloading position with the aid of the tilting drive and its controller and can be fixed temporarily in this position.

13. Sorting conveyor provided with tilting bowls according to one of Claims 1 to 12, **characterized in that** the duration, the speed and the acceleration of the tilting operation of the carrier bowl (8) can be controlled.

14. Sorting conveyor provided with tilting bowls according to one of Claims 1 to 13, **characterized in that** the tilting operation of the carrier bowl (8) can be controlled as a function of the size, the position and the weight of the conveyed goods lying on the carrier bowl (8).

15. Sorting conveyor provided with tilting bowls according to one of Claims 1 to 14, **characterized in that**, when arranging two carrier bowls (8) on one car, it is possible for the tilting movement of the two carrier bowls (8) to be controlled independently or to be controlled simultaneously.

16. Sorting conveyor provided with tilting bowls according to Claims 1 - 15, **characterized by** a control system (20-25) for a train of the sorting conveyor provided with tilting bowls, comprising a power supply line (18) for the system, communications lines (23) between a junction box (26) connected to an upstream computer and the controllers (101-108) arranged on the individual cars, in each case a communications line (24, 25) between the controllers (110-108) of adjacent cars (2) of a train for self-addressing of these cars (2) and a power supply line (19) between in each case the controller (101-108) of a car (2) and the associated electric motor (11) and locking bolt (16).

17. Method for controlling the sorting conveyor provided with tilting bowls according to Claims 1 to 16, **characterized in that** the junction box (26), after communicating with an upstream computer in which the information required for operating the transport system is stored, provides a controller, which is arranged on each car (2) coupled to a train and is determined as the master, with an address, and this controller passes on the address for self-addressing purposes to a further car of the train, this car, after self-configuration, for its part passing on the address for self-configuration purposes to the next car until all cars (2) of the train have been configured.

18. Method according to Claim 17, **characterized in that** the activation commands for the electric motor (11) for the purpose of altering the position of the tilting lever (9) are fed via the communications lines (23) between the junction box (26) connected to the upstream computer and the controllers (101-108) arranged on the individual cars (2).

19. Method according to Claim 18, **characterized in that** information relating to system diagnostics and statistics is exchanged via the communications lines (23).

20. Method according to one of Claims 17 to 19, **characterized in that** the locking bolt (16) for the tilting lever (9) is electromagnetically unlatched prior to activation of the electric motor (11).

## Revendications

1. Convoyeur de triage à plateaux basculants (1), en particulier pour des colis, des paquets, des récipients et des bagages, composé de chariots (2), couplés les uns aux autres pour former un train et mobiles le long de rails de roulement (4), équipé chacun d'au moins un plateau porteur (8) posé pardessus qui, à l'aide d'un entraînement basculant placé sur le chariot (2), peut pivoter de chaque côté autour d'un axe de basculement (7) qui s'étend en direction de déplacement depuis une position de transport horizontale jusqu'à une position de déchargement pour déposer l'objet transporté qui repose sur le plateau porteur (8), l'entraînement basculant qui commande le plateau porteur (8) lors du mouvement pivotant s'appliquant à l'extrémité inférieure libre d'un levier basculant (9) qui s'étend vers le bas, peut pivoter autour de l'axe de basculement (7) monté sur le chariot (2) et porte au centre le plateau porteur (8) à son extrémité supérieure opposée,
**caractérisé en ce que** l'entraînement basculant est fixé à l'extrémité inférieure libre du levier basculant (9) et comprend un moteur électrique (11) dont on peut modifier la direction de rotation ainsi qu'au moins un pignon (12) qu'il peut entraîner, dont l'axe de rotation est parallèle à l'axe de basculement (7) et qui correspond à une crémaillère (13) arquée fixée au chariot (2) transversalement à la direction de déplacement, la crémaillère s'étendant à équidistance de l'axe de basculement (7) des plateaux porteurs (8) et la dimension de son arc correspond au moins à l'angle d'oscillation maximal - du levier basculant (9) - nécessaire pour basculer le plateau porteur (8) dans la position de déchargement.

2. Convoyeur de triage à plateaux basculants selon la revendication 1, **caractérisé en ce que** chaque pignon (12) est placé directement sur l'arbre de sortie du moteur électrique (11).

3. Convoyeur de triage à plateaux basculants selon la revendication 1 ou 2, **caractérisé en ce que** deux leviers basculants (9) s'appliquent à chaque plateau porteur, le moteur électrique (11) est fixé entre leurs extrémités inférieures libres et porte, à chacune des deux extrémités d'un arbre de moteur, un pignon qui correspond à une des deux crémaillères (13) arquées fixées au chariot.

4. Convoyeur de triage à plateaux basculants selon la revendication 1, 2 ou 3, **caractérisé en ce que** le moteur électrique (11) peut être commandé par un contrôleur placé dans la zone supérieure du levier basculant (9) proche du plateau porteur.

5. Convoyeur de triage à plateaux basculants selon les revendications 1 à 4, **caractérisé en ce qu'**un mécanisme de verrouillage qui permet de bloquer le plateau porteur (8) en position de transport horizontale est prévu entre le levier basculant (9) et le chariot (2).

6. Convoyeur de triage à plateaux basculants selon la revendication 5, **caractérisé en ce que** le mécanisme de verrouillage consiste en une cheville de blocage (16) placée sur le levier basculant (9) et susceptible d'être verrouillée sur le chariot (2) de manière électromagnétique.

7. Convoyeur de triage à plateaux basculants selon les revendications 1 à 6, **caractérisé en ce que** l'angle d'oscillation du levier basculant (9) peut être commandé par électronique et peut être limité par des butées et/ou interrupteurs de fin de course (14) prévus sur le chariot (2) de chaque côté de la course d'oscillation.

8. Convoyeur de triage à plateaux basculants selon la revendication 7, **caractérisé en ce que** les butées et/ou interrupteurs de fin de course (14) interagissent mécaniquement avec la cheville de blocage (16) placée sur le levier basculant (9).

9. Convoyeur de triage à plateaux basculants selon l'une des revendications 1 à 8, **caractérisé en ce que** la position de transport horizontale du plateau porteur (8) peut être réglée par la force de ressort qui s'exerce sur le levier basculant (9).

10. Convoyeur de triage à plateaux basculants selon la revendication 9, **caractérisé en ce qu'**un ressort, conçu comme un ressort à lames (27) contraint d'un côté, s'étend parallèlement à l'axe du levier basculant dans la position déchargée et conserve la force de rappel du ressort entre des butées (28) sur le chariot (2) dès que le levier basculant (9) s'écarte de la position de repos.

11. Convoyeur de triage à plateaux basculants selon l'une des revendications 1 à 10, **caractérisé en ce que** le courant électrique pour l'entraînement et/ou la commande est fourni par l'intermédiaire de lignes de contact (30) sur le trajet du chariot.

12. Convoyeur de triage à plateaux basculants selon l'une des revendications 1 à 11, **caractérisé en ce que**, à l'aide de l'entraînement basculant et de sa commande, le plateau porteur (8) peut pivoter de façon adéquate de la position horizontale jusque dans une position quelconque entre la position de transport horizontale et la position de déchargement et peut être maintenu temporairement dans cette position.

13. Convoyeur de triage à plateaux basculants selon l'une des revendications 1 à 12, **caractérisé en ce qu'**il est possible de commander l'opération de basculement du plateau porteur (8) quant à la durée, la vitesse et l'accélération.

14. Convoyeur de triage à plateaux basculants selon l'une des revendications 1 à 13, **caractérisé en ce que** l'opération de basculement du plateau porteur (8) peut être commandée d'après la taille, la position et le poids de l'objet qui se trouve sur le plateau porteur (8).

15. Convoyeur de triage à plateaux basculants selon l'une des revendications 1 à 14, **caractérisé en ce que** le mouvement de basculement des deux plateaux porteurs (8) peut être commandé indépendamment ou simultanément quand on place deux plateaux porteurs (8) sur un chariot.

16. Convoyeur de triage à plateaux basculants selon l'une des revendications 1 à 15, **caractérisé par** un système de contrôle (20 à 25) destiné à un train du convoyeur de triage à plateaux basculants et composé d'une ligne d'alimentation électrique (18) pour le système, de lignes de communication (23) entre une boîte de jonction (26) raccordée à un ordinateur maître et les contrôleurs (101 à 108) placés sur les différents chariots, d'une ligne de communication (24, 25) respectivement entre les contrôleurs (101 à 108) placés sur des chariots (2) voisins d'un train pour que ces chariots (2) soient adressées automatiquement et d'une ligne d'alimentation électrique (19) entre chacun des contrôleurs (101 à 108) d'un chariot (2) et le moteur électrique (11) correspondant ainsi que de chevilles de blocage (16).

17. Procédé pour commander un convoyeur de triage à plateaux basculants selon l'une des revendications 1 à 16,
**caractérisé en ce qu'**après avoir communiqué avec un ordinateur maître sur lequel sont enregistrées les informations nécessaires pour faire fonctionner le système de transport, la boîte de jonction (26) communique une adresse à un des contrôleurs, placé sur chaque chariot (2) couplé pour former un train, qui fait fonction de maître et qui pour réaliser l'adressage automatique retransmet l'adresse à un autre chariot du train, lequel retransmet après la configuration automatique l'adresse aux chariots suivants pour réaliser l'adressage automatique jusqu'à ce que tous les chariots (2) du train soient configurés.

18. Procédé selon la revendication 17, **caractérisé en ce que** les ordres d'activation destinés au moteur électrique (11) afin de modifier la position du levier basculant (9) sont acheminés par l'intermédiaire des lignes de communication (23) entre la boîte de jonction (26) raccordée à l'ordinateur maître et les contrôleurs (101 à 108) placés sur les différents chariots (2).

19. Procédé selon la revendication 18, **caractérisé en ce que** des renseignements concernant le diagnostic du système et les statistiques sont échangés par l'intermédiaire des lignes de communication (23).

20. Procédé selon l'une des revendications 17 à 19, **caractérisé en ce que** les chevilles de blocage (16) pour le levier pivotant (9) sont déverrouillées de manière électromagnétique avant que le moteur électrique (11) soit activé.
